# EUROPEAN PATENT SPECIFICATION

(11) **EP 2 459 433 B1**
(45) Date of publication and mention of the grant of the patent: **02.09.2015**
(21) Application number: 10732696.9
(22) Date of filing: 12.07.2010
(51) Int. Cl.: B62D 33/06

(54) **TRACTOR CABS**
TRAKTORKABINEN
CABINES DE TRACTEURS

(30) Priority: 27.07.2009 GB 0912977
(43) Date of publication of application: 06.06.2012
(73) Proprietor: AGCO GmbH, 87616 Marktoberdorf (DE)
(72) Inventor: EPPLE, Johann, 87616 Marktoberdorf (DE); MAYR, Stefan, 82389 Bobing (DE)
(74) Representative: Smith, Louise Marie
(86) International application number: PCT/EP2010/059967
(87) International publication number: WO 2011/012432

(56) References cited:
- EP-A1- 1 191 154
- EP-A2- 1 707 478
- DE-A1- 2 147 637
- DE-U1-202006 004 334

## Description

This invention relates to a tractor cabs and in particular to opening front window arrangement for such cabs.

There is a requirement for improved forward and upward visibility from tractor cabs particularly when performing tasks such as loading with a front mounted loader. Also there is a need to have an opening front window and to have a watertight seal around such an opening window.

DE2147637 discloses a tractor cab fitted with a front window hinged along its top edge to a cross member of the ROPS which is set back from the front roll over protection structure (ROPS) posts.

Thus according to the present invention there is provided a tractor cab with a roll-over protection structure (ROPS) which has generally vertically extending front corner posts and an opening front window which is hinged along its top edge to a cross member of the ROPS which extends across the cab at a location set back from the top of the front corner posts of the ROPS, the top edge of the front window being curved to extend around the top front edge of the cab, characterised in that tractor cab with a roll-over protection structure (ROPS) which has generally vertically extending front corner posts and an opening front window which is hinged along its top edge to a cross member of the ROPS, which extends across the cab at a location set back from the top of the front corner posts of the ROPS, the top edge of the front window being curved to extend around the top front edge of the cab, characterised in that the ROPS is provided with a gutter member secured to the cross member which extends across the front of the cab, the top edge of the front window being curved to extend partially over the gutter member and sealing thereto when the front window is in its closed position and wherein the front window is supported by hinges carried by the gutter member.

Such an arrangement provides significantly improved forward and upward visibility as there is no cross member extending across the top front edge of the cab and the top edge of the window itself extends around the top front edge of the cab.

Also, this arrangement ensures good weatherproofing of the critical top edge of the window.

The water may conveniently drain from the outer ends of the gutter member into generally vertically extending drainage members supported from corner posts of the cab.

Conveniently edges of the gutter member and the generally vertical drainage members carry sealing means to seal with the window.

The front of the cab may also include a fixed lower glazed area below the opening window.

Conveniently edges of the lower glazed area also seal onto the sealing means carried by the generally vertically extending drainage members.

A metal glazing bar may extend across the upper edge of the window, the window being hinged from the glazing bar. The glazing bar conveniently contacts the sealing carried by the edge of the gutter member.

Seals preferably extend along the edges of the glazing bar and contact the inside of the window.

The present invention will now be described, by way of example only, with reference to the accompanying drawings in which:-
- Figure 1: shows a front perspective view of a tractor cab in accordance with the present invention with the front opening window in a closed position;

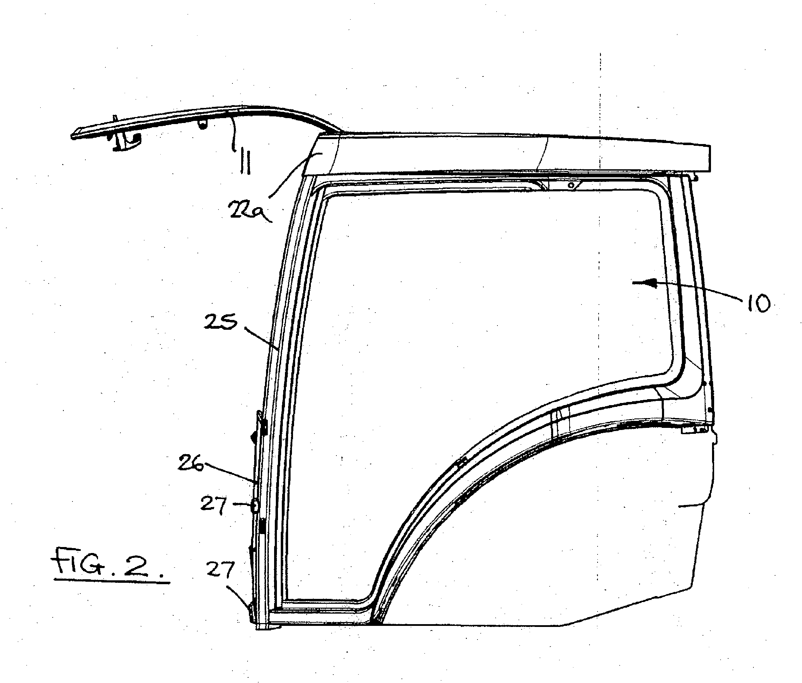

- Figure 2: shows a side view of the cab of Figure 1 with the front window in its open position;
- Figure 3: shows a plan view of the cab of Figures 1 and 2 with the window in its closed position;
- Figure 4: shows a section on the line A-A of Figure 3;
- Figure 5: shows a section on the line B-B of Figure 3;
- Figure 6: shows a cross section on the line C-C of Figure 1;
- Figure 7: shows a fragmentary view of the upper front corner of the ROPS structure of the cab of Figure 1;
- Figure 8: shows a cross section on the line D-D of Figure 1;
- Figure 9: shows a cross section on the line E-E of Figure 3, and

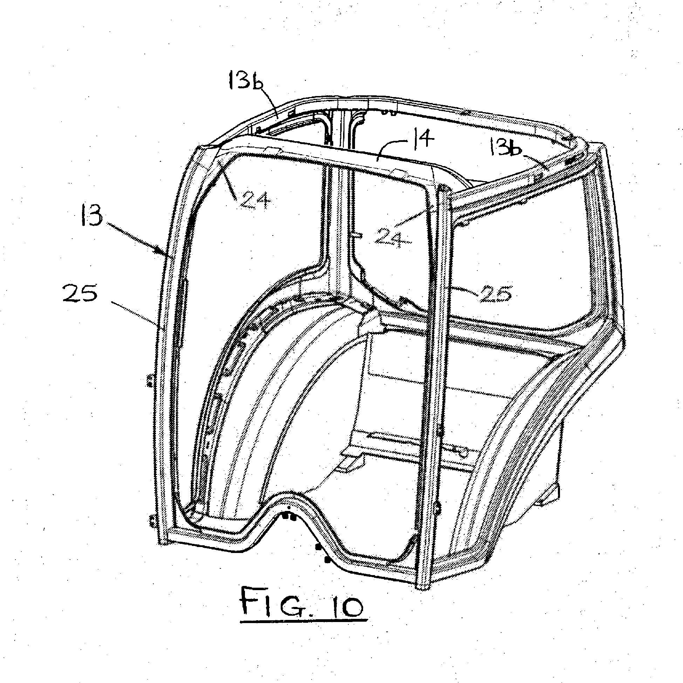

Figure 10 shows a perspective view of the ROPS used in the cab of the present invention.

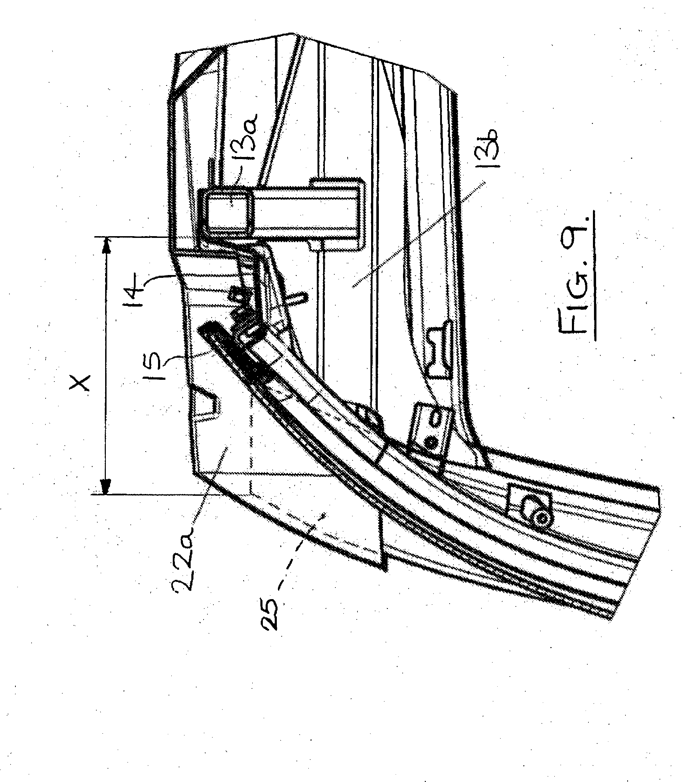

Referring to the drawings, a tractor cab 10 has an opening front window 11 which is mounted along its top edge by hinges 12 which are supported from a cross member 13a of a roll-over protection structure (ROPS) 13 via a gutter member 14 which is in turn supported from cross member 13a and forms an integral part of the ROPS. The ROPS also has front generally vertical posts 25. Cross member 13a is supported from upper horizontal ROPS members 13b and is set back rearwardly from the front edge of the top of posts 25 (shown in dotted detail in Figure 9) by a significant distance X which is typically 200mm. This allows the top edge portion 15 of the front window 11 to be curved and to extend around the top front edge of the cab.

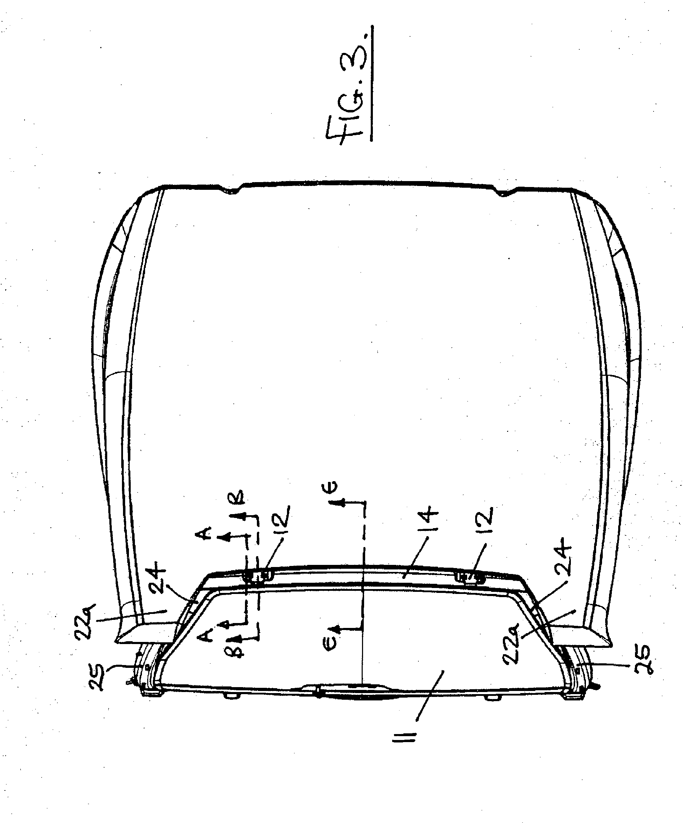

As best seen in Figures 3 and 9 this provides a significantly improved field of view for the tractor operator in a forward and upward direction as compared with a cab where the front cross member 13 is secured between the upper ends of the posts 25.

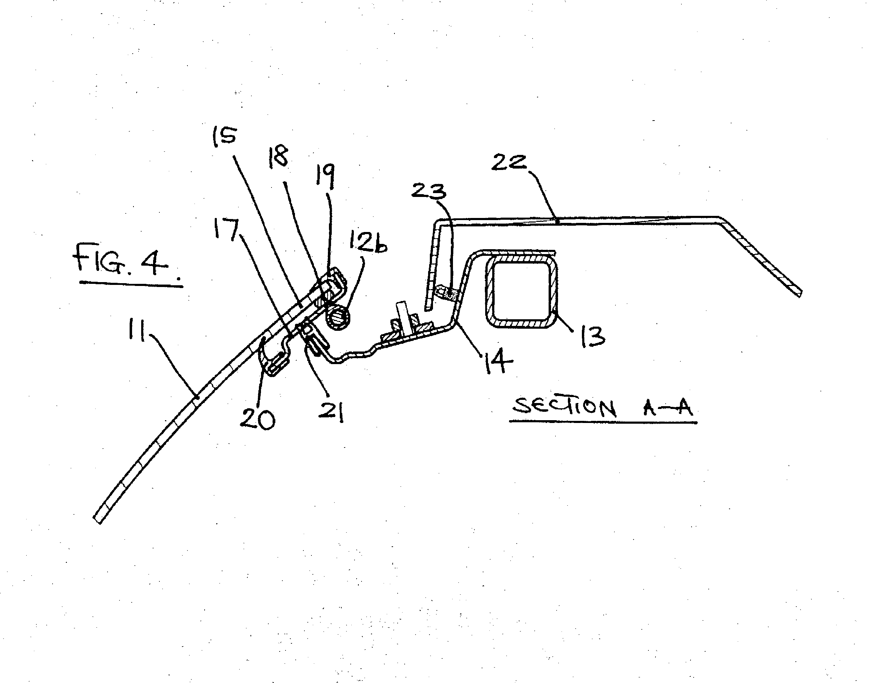

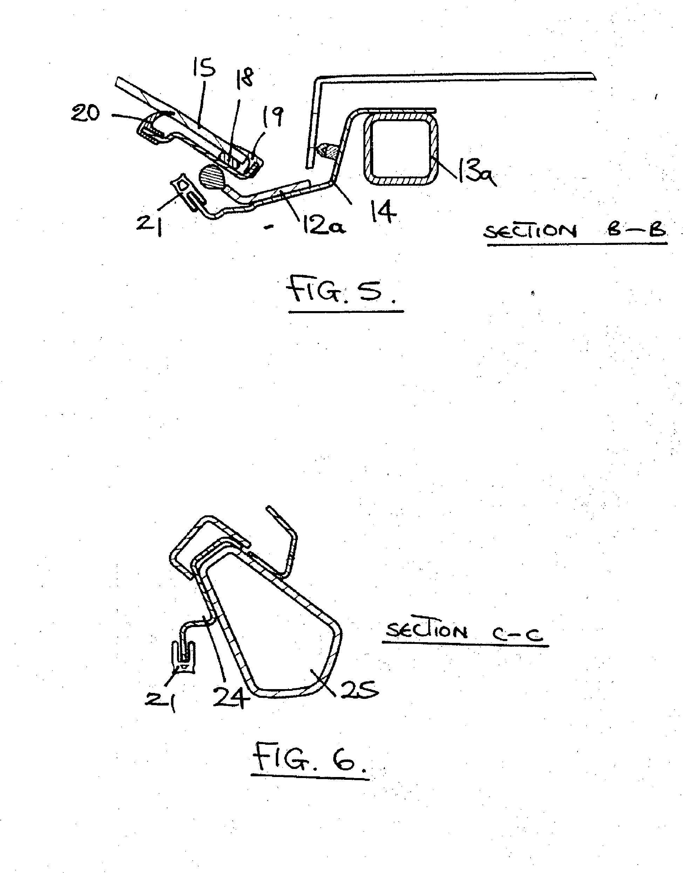

Referring to Figures 4 and 5 the gutter member 14 directly supports the hinge leaf 12a whilst the other hinge leaf 12b is supported from a metal glazing bar 17 which is secured to the inner surface of the top edge portion 15 of the window by an adhesive bead 18. The glazing bar is sealed to the window 11 by seals 19 and 20 which extend along the transverse edges of the sealing bar.

When the window is in the closed position, as shown in Figure 4, the glazing bar 17 contacts a seal 21 which is supported from the edge of the gutter member 14. An inner roof panel 22 is also sealed to gutter 14 by a seal 23. Either side of the window 11 the outer panel of the cab roof extends forwardly of the window at 22a.

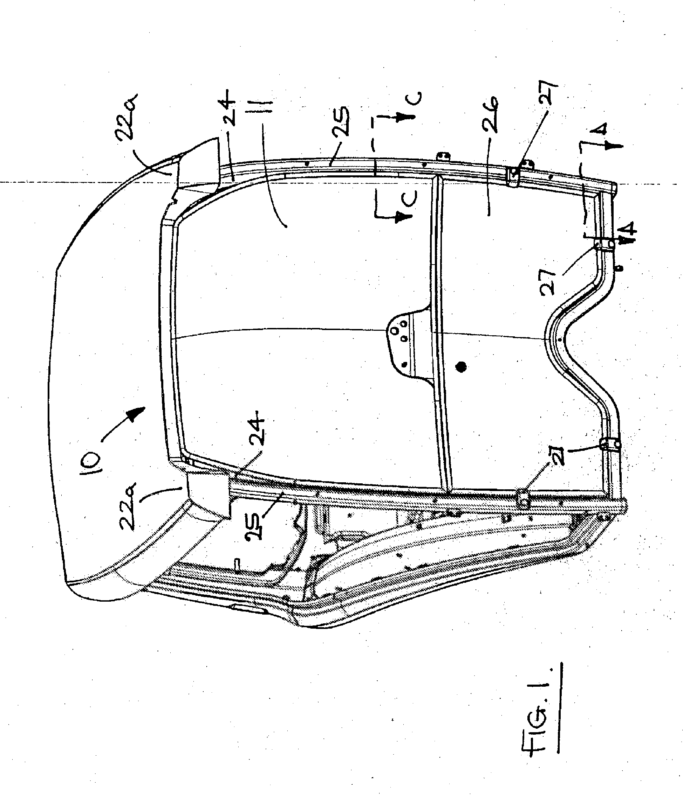

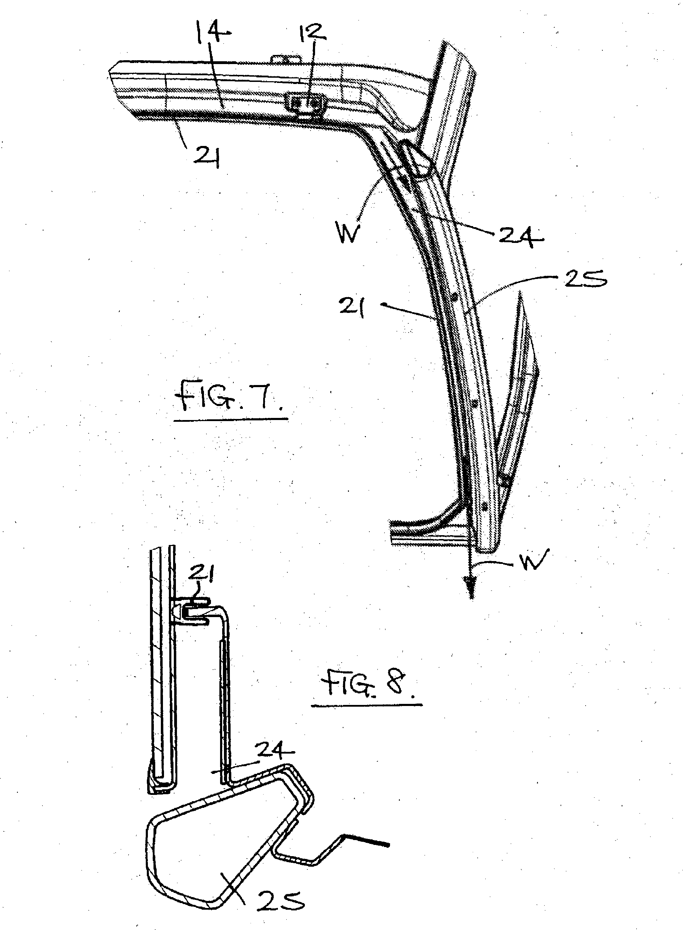

As best seen from Figure 7, the outer ends of the gutter member 14 merge with generally vertically extending drainage channels 24 which, as shown in Figure 6, are supported from the front vertical posts 25 of the cab ROPS structure. Thus any water which enters the gutter member 14 drains into the generally vertical extending drainage channels 24 and hence vertically downwards, as shown by the arrow W in Figure 7, onto the ground. The edge of the drainage channel carries the continuation of seal 21 to ensure a water tight seal with the opening window 11 and also with a fixed lower front window 26 which is mounted on the cab below the opening window 11. As best seen in Figure 1, the lower fixed window 26 is held in position by securing clips 27 and additional adhesive if required. Figure 8 shows the seal 21 making contact with the fixed lower front window 26 towards the bottom of this window (need to explain the Figure 8 more clearly).

As will be appreciated, from the above description, the present invention provides a tractor cab with an opening front window 11 which has significantly improved forward and upward visibility and which also has a water tight seal around the opening window.

## Claims

1. A tractor cab (10) with a roll-over protection structure (ROPS) (13) which has generally vertically extending front comer posts (25) and an opening front window (11) which is hinged along its top edge to a cross member (13a) of the ROPS, which extends across the cab at a location set back from the top of the front corner posts (25) of the ROPS (13), the top edge of the front window (11) being curved to extend around the top front edge of the cab, **characterised in that** the ROPS is provided with a gutter member (14) secured to the cross member (13a) which extends across the front of the cab (10), the top edge (15) of the front window (11) being curved to extend partially over the gutter member (14) and sealing thereto when the front window (11) is in its closed position and wherein the front window (11) is supported by hinges carried by the gutter member (14).

2. A cab (10) according claim 1 in which water drains from the outer ends of the gutter member (14) into generally vertically extending drainage members supported from the front corner posts of the cab.

3. A cab (10) according to claim 2 in which edges of the gutter member and generally vertical drainage members (24) carry sealing means (21) to seal with the window (11).

4. A cab (10) according to any preceding claim in which the front of the cab also includes a fixed lower glazed area (26) below the opening window (11).

5. A cab (10) according to claim 4 in which edges of the lower glazed area (26) also seal onto the sealing means (21) carried by the generally vertically extending drainage member (24).

6. A cab (10) according to any one of claims 1 to 5 in which a metal glazing bar (17) extends across the upper edge of the window (11), the window (11) being hinged from the glazing bar (17).

7. A cab (10) according to claims 1 to 6 in which the glazing bar (17) seals with the gutter member (14) when the front window (11) is in its closed position.

8. A cab (10) acccording to claim 7 in which seals (19,20) extend along the edges of the glazing bar (12) and contact the inside of the window (11).

## Patentansprüche

1. Kabine (10) eines Traktors oder Zugfahrzeugs mit einer Überroll-Schutzstruktur ("Roll-Over Protection Structure", ROPS) (13), welche sich im Wesentlichen vertikal erstreckende vordere Eckpfosten (25) und ein sich öffnendes vorderes Fenster (11) aufweist, wobei das vordere Fenster (11) entlang seines oberen Randes verschwenkbar an einem Querelement (13a) des ROPS angelenkt ist, welches sich an einem Ort, der gegenüber dem oberen Ende der vorderen Eckpfosten (25) der ROPS (13) zurückversetzt ist, entlang der Kabine erstreckt, wobei der obere Rand des vorderen Fensters (11) für eine Erstreckung um den oberen vorderen Rand der Kabine gekrümmt ist, **dadurch gekennzeichnet, dass** die ROPS mit einem Rinnen-Element (14) ausgestattet ist, welches an dem Querelement (13a), welches sich entlang der Vorderseite der Kabine (10) erstreckt, befestigt oder gesichert ist, wobei der obere Rand (15) des vorderen Fensters (11) gekrümmt ist zur Erstreckung teilweise über das Rinnen-Element (14) und gegenüber diesem abgedichtet ist, wenn sich das vordere Fenster (11) in seiner geschlossenen Position befindet, wobei das vordere Fenster (11) durch Scharniere oder Gelenke, die von dem Rinnen-Element (14) getragen sind, abgestützt ist.

2. Kabine (10) nach Anspruch 1, wobei Wasser von den äußeren Enden des Rinnen-Elements (14) in sich im Wesentlichen vertikal erstreckende Drainage-Elemente läuft, die von den vorderen Eckpfosten der Kabine getragen werden.

3. Kabine (10) nach Anspruch 2, wobei Ränder des Rinnen-Elements und der sich im Wesentlichen vertikal erstreckenden Drainage-Elemente (24) Dichtorgane (21) tragen zur Abdichtung gegenüber dem Fenster (11).

4. Kabine (10) nach einem der vorhergehenden Ansprüche, wobei die Vorderseite der Kabine auch einen fixierten unteren verglasten Bereich (26) unter dem sich öffnenden Fenster (11) aufweist.

5. Kabine (10) nach Anspruch 4, wobei Ränder des unteren verglasten Bereichs (26) ebenfalls auf den Dichtorganen (21), die von den sich im Wesentlichen vertikal erstreckenden Drainage-Elementen (24) getragen sind, abgedichtet sind.

6. Kabine (10) nach einem der Ansprüche 1 bis 5, wobei sich eine metallische Glas-Stange (17) entlang des oberen Rands des Fensters (11) erstreckt, wobei das Fenster (11) an der Glas-Stange (17) angelenkt ist.

7. Kabine (10) nach einem der Ansprüche 1 bis 6, wobei die Glas-Stange (17) mit dem Rinnen-Element (14) abgedichtet ist, wenn sich das vordere Fenster (11) in seiner geschlossenen Position befindet.

8. Kabine (10) nach Anspruch 7, wobei sich Dichtungen (19, 20) entlang der Ränder der Glas-Stange (12) erstrecken und die Innenseite des Fensters (11) kontaktieren.

## Revendications

1. Cabine de tracteur (10) avec une structure de protection au retournement (ROPS) (13) qui comporte des montants d'angle avant (25) s'étendant sensiblement verticalement et une fenêtre avant ouvrante (11) qui est articulée le long de son bord supérieur sur un élément transversal (13a) de la structure ROPS, qui s'étend à travers la cabine à un emplacement défini en arrière par rapport à la partie supérieure des montants d'angle avant (25) de la structure ROPS (13), le bord supérieur de la fenêtre avant (11) étant incurvé de manière à s'étendre autour du bord avant supérieur de la cabine, **caractérisée en ce que** la structure ROPS comporte un élément formant gouttière (14) fixé sur l'élément transversal (13a) qui s'étend à travers l'avant de la cabine (10), le bord supérieur (15) de la fenêtre avant (11) étant incurvé de manière à s'étendre partiellement au-dessus de l'élément formant gouttière (14) et assurant l'étanchéité de celle-ci lorsque la fenêtre avant (11) est dans sa position fermée et dans laquelle la fenêtre avant (11) est supportée par des charnières maintenues par l'élément formant gouttière (14).

2. Cabine (10) selon la revendication 1, dans laquelle l'eau s'écoule à partir des extrémités externes de l'élément formant gouttière (14) dans des éléments de drainage s'étendant sensiblement verticalement, supportés à partir des montants d'angle avant de la cabine.

3. Cabine (10) selon la revendication 2, dans laquelle des bords de l'élément formant gouttière et des éléments de drainage s'étendant sensiblement verticalement (24) comportent des moyens d'étanchéité (21) destinés à assurer l'étanchéité de la fenêtre (11).

4. Cabine (10) selon l'une quelconque des revendications précédentes, dans laquelle l'avant de la cabine comporte aussi une zone vitrée inférieure fixe (26) au-dessous de la fenêtre ouvrante (11).

5. Cabine (10) selon la revendication 4, dans laquelle des bords de la zone vitrée inférieure (26) sont aussi scellés sur les moyens d'étanchéité (21) maintenus par les éléments de drainage s'étendant sensiblement verticalement (24).

6. Cabine (10) selon l'une quelconque des revendications 1 à 5, dans laquelle une barre de vitrage métallique (17) s'étend à travers le bord supérieur de la fenêtre (11), la fenêtre (11) étant articulée à partir de la barre de vitrage (17).

7. Cabine (10) selon les revendications 1 à 6, dans laquelle la barre de vitrage (17) assure l'étanchéité de l'élément formant gouttière (14) lorsque la fenêtre avant (11) est dans sa position fermée.

8. Cabine (10) selon la revendication 7, dans laquelle des joints (19, 20) s'étendent le long des bords de la barre de vitrage (12) et entrent en contact avec l'intérieur de la fenêtre (11).
